# EUROPEAN PATENT APPLICATION

(11) **EP 1 469 666 A2**
(43) Date of publication of application: **20.10.2004**
(21) Application number: 04252181.5
(22) Date of filing: 14.04.2004
(51) Int. Cl.: H04N 1/32

(54) **Communication apparatus and communication method for processing data sent from communication partner**

(30) Priority: 15.04.2003 JP 2003110341
(71) Applicant: CANON KABUSHIKI KAISHA, Tokyo (JP)
(72) Inventor: Fujii, Kenichi, Okta-ku Tokyo (JP)
(74) Representative: Beresford, Keith Denis Lewis

(57) **Abstract**

Provided is a communication apparatus including:
an instruction means for instructing a communication partner to transmit data having a designated data length; and
a discrimination means for discriminating a status of the communication apparatus,
in which the instruction means instructs the communication partner to interrupt data transmission by setting the designated data length a predetermined length in accordance with a result of discrimination by the discrimination means.

## Description

### BACKGROUND OF THE INVENTION

### Field of the Invention

The present invention relates to a communication apparatus, such as a printer, that outputs data sent from a communication partner and a communication method therefor.

### Related Background Art

Conventionally, various image printing systems have been developed which are each constructed by, for instance, connecting an image forming apparatus, such as a printer, and an image pickup apparatus, such as a digital still camera, a digital video camera, or a camera-equipped mobile terminal, to each other through wireless communication. For instance, an image printing system is known in which when an out-of-ink or out-of-paper error or the like occurs to an image forming apparatus at the time of outputting, an image pickup apparatus receives error information from the image forming apparatus and retransmits data in response to a re-transmission request from the image forming apparatus or performs error displaying in accordance with the error information.

Also, in a system disclosed in Japanese Patent Application Laid-Open H09-95016, when data from a host computer is printed by a printer, if an error occurs during the printing, error information is sent to the host computer and the printing is interrupted. Then, when a cause of the error is removed, the printing is resumed. In addition, if there exist any pages whose printing has ended in failure, the image forming apparatus issues a re-transmission request command to the host computer, which then generates print data for re-transmission and transmits it to the image forming apparatus.

With the conventional technique described above, however, when an error occurs to the image forming apparatus, the image pickup apparatus displays an error message in accordance with an error notification. Also, when a re-transmission request command requesting re-transmission is received from the image forming apparatus, processing is performed by following a flow in which print data is regenerated in accordance with the re-transmission request command and the re-transmission print data is transmitted to the image forming apparatus. Therefore, in order to perform this processing, it is required to interpret the specialized re-transmission request command for re-transmission.

In recent years, however, simple communication protocols have been developed with each of which control of communication between the image forming apparatus and the image pickup apparatus is performed without using such a specialized re-transmission request command for re-transmission at the time of printing or without even issuing an error notification (for instance, the Advanced Image Printing (DPOF printing) defined in the Basic Imaging Profile of the Bluetooth standard).

In this case, no error notification is issued, although a user desires to be notified about an out-of-ink or paper jamming situation or the like and hopes the continuation of processing by the image pickup apparatus without using a specialized command when an error occurring to the image forming apparatus is removed. Also, as distinct from a device like a personal computer that has affluent resources, such as a storage area, and high performance, in the case of a device, such as the image pickup apparatus or the image forming apparatus, whose resources including the storage area are limited and performance is also limited, it is also required to take, into account, flow control and the like at the time when the data reception area of the image forming apparatus becomes full.

### SUMMARY OF THE INVENTION

An object of the present invention is to make it possible to perform error notification control and flow control at the time of printing or the like even with a simple communication protocol, such as the Advanced Image Printing defined in the Basic Imaging Profile of the Bluetooth standard, that does not contain the error notification control and the flow control.

Another object of the present invention is to provide an ease-of-use communication apparatus.

Other objects of the present invention will become apparent from the following description to be made with reference to the accompanying drawings.

### BRIEF DESCRIPTION OF THE DRAWINGS

FIG. 1 is a construction diagram of an image transfer system according to a first embodiment of the present invention;
FIG. 2 is a block diagram of an image pickup apparatus and an image forming apparatus according to an embodiment of the present invention;
FIG. 3 is an internal block diagram of the image forming apparatus according to the embodiment of the present invention;
FIG. 4 is an internal block diagram of the image pickup apparatus according to the embodiment of the present invention;
FIG. 5 is a sequence diagram of an image pickup apparatus and a printer according to the first embodiment of the present invention;
FIG. 6 is a sequence diagram of an image pickup apparatus and a printer according to a second embodiment of the present invention;
FIG. 7 is a sequence diagram of the image pickup apparatus and the printer according to the first embodiment of the present invention;
FIG. 8 is a sequence diagram of the image pickup apparatus and the printer according to the first embodiment of the present invention;
FIG. 9 is comprised of FIG. 9A and 9B showing flowcharts of an operation of the printer according to the first embodiment of the present invention;
FIG. 10 is comprised of FIG. 10A and 10B showing flowcharts of an operation of the printer according to the second embodiment of the present invention;
FIG. 11 is a flowchart showing an operation of the printer according to an embodiment of the present invention;
FIG. 12 is a flowchart showing an operation of the printer according to another embodiment of the present invention;
FIG. 13 is comprised of FIG. 13A and 13B showing flowcharts of an operation of the image pickup apparatus according to an embodiment of the present invention;
FIG. 14 is a flowchart showing an operation of the image pickup apparatus according to an embodiment of the present invention;
FIG. 15 shows the contents of a print job list table managed by the printer according to a third embodiment of the present invention; and
FIG. 16 is a flowchart showing an operation of a printer according to a third embodiment of the present invention.

### DESCRIPTION OF THE PREFERRED EMBODIMENTS

Embodiments of the present invention will now be described with reference to the accompanying drawings.

### <First Embodiment>

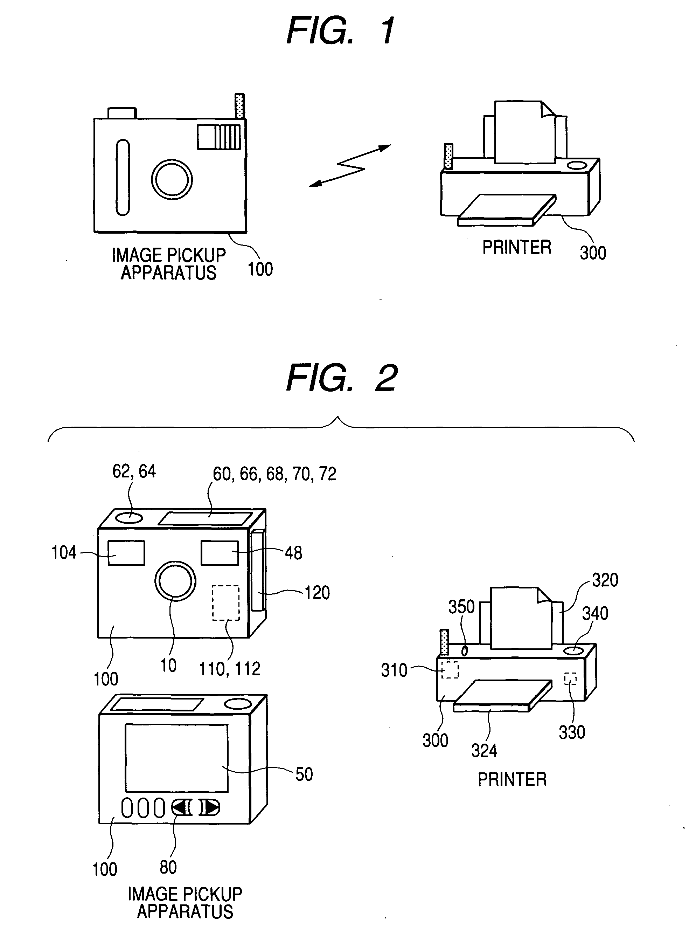

FIG. 1 shows an overall construction of an image transfer system according to an embodiment of the present invention.

In FIG. 1, reference numeral 100 denotes an apparatus to which the present invention is applied. In this embodiment, the apparatus 100 is a digital still camera (hereinafter referred to as the "image pickup apparatus") having a wireless communication means to be described later. Also, reference numeral 300 indicates an image forming apparatus to which the present invention is applied. In this embodiment, a case will be described in which the image forming apparatus 300 is a printer.

The image pickup apparatus 100 and the printer 300 are capable of mutually transmitting/receiving data containing a command or a picked-up image through wireless communication based on the Bluetooth standard.

FIG. 2 shows an external construction of the image pickup apparatus 100. As shown in this drawing, the image pickup apparatus 100 is equipped with a flash 48, a mode dial switch 60, shutter switches 62 and 64, a single shutter/continuous shutter switch 66, a compression mode switch 68, an operation unit 70, a main switch 72, an optical finder 104, a communication unit 110, an antenna 112, a recording unit 120, a photographing lens 10, a display unit 50, a menu selection operation unit 80, and the like in respective portions of its enclosure.

On the other hand, the printer 300 is equipped with a sheet feeding unit 320, a sheet discharging unit 324, a power supply unit 330, an operation unit 340, a display unit 350, and a communication unit 310 in respective portions of its enclosure.

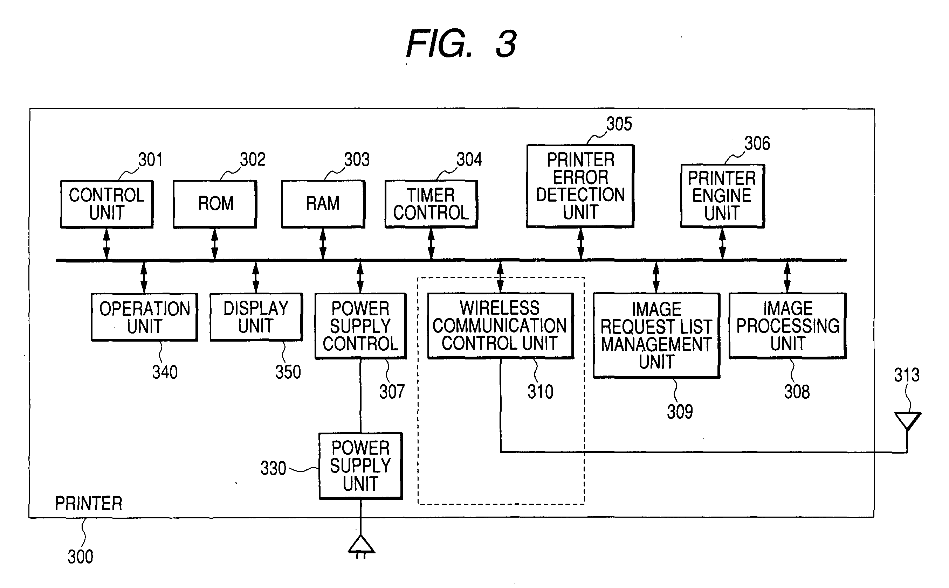

FIG. 3 is a block diagram showing an internal construction of the printer 300. As shown in this drawing, the printer 300 includes a control unit 301, a ROM 302, a RAM 303, a timer control unit 304, a printer error detection unit 305, a printer engine unit 306, a power supply control unit 307, an external power supply 330, an image processing unit 308, an image request list management unit 309, a wireless communication control unit 310, and an antenna 313. Here, the wireless communication control unit 310 and the antenna 313 are provided in order to perform wireless communication based on the Bluetooth standard.

With the construction described above, the printer 300 performs image printing by receiving an image list describing a print request using the wireless communication control unit 310 and the control unit 301 that also performs protocol control for the wireless communication, acquiring image data described on the image list while performing management using the image request list management unit 309, performing image processing on the acquired image data using the image processing unit 308, and transferring resultant data to the printer engine unit 306.

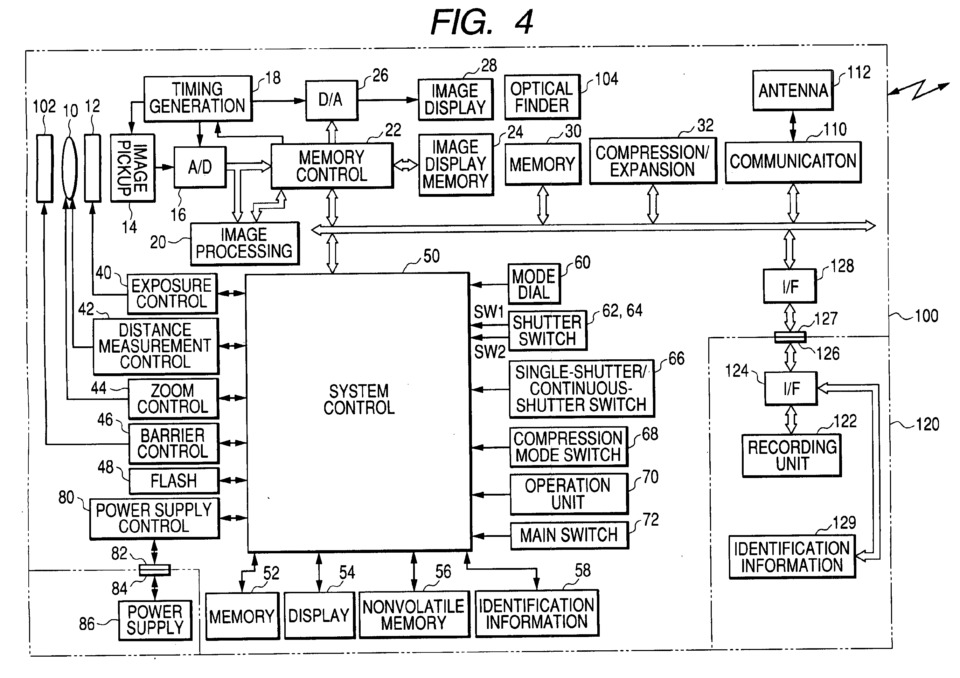

FIG. 4 is a block diagram showing an internal construction of the image pickup apparatus 100.

As shown in this drawing, the image pickup apparatus 100 includes a protection unit 102, a photographing lens 10, a shutter 12, an image pickup element 14, an A/D converter 16, a timing generation circuit 18, an image processing circuit 20, a memory control circuit 22, an image display memory 24, a D/A converter 26, an image display unit 28, a memory 30, a compression/expansion circuit 32, an optical finder 104, a communication unit 110, an antenna 112, a system control circuit 50, an exposure control unit 40, a distance measurement control unit 42, a zoom control unit 44, a barrier control unit 46, a flash 48, a power supply control unit 80, connectors 82 and 84, a power supply 86, a memory 52, a display unit 54, a nonvolatile memory 56, an identification information unit 58, a mode dial switch 60, shutter switches 62 and 64, a single shutter/continuous shutter switch 66, a compression mode switch 68, an operation unit 70, and a main switch 72.

In the image pickup apparatus 100 having the construction described above, the photographing lens 10 captures an optical image of a subject. The shutter 12 has a diaphragm function. The image pickup element 14 converts the optical image captured with the photographing lens 10 into an electric signal. The A/D converter 16 converts an analog signal outputted from the image pickup element 14 into a digital signal. The timing generation circuit 18 is a circuit that supplies a clock signal and a control signal to the image pickup element 14, the A/D converter 16, and the D/A converter 26 and is controlled by the memory control circuit 22 and the system control circuit 50.

The image processing circuit 20 performs predetermined pixel interpolation processing and color conversion processing on data from the A/D converter 16 or data from the memory control circuit 22. Also, the image processing circuit 20 performs predetermined computation processing on the picked-up image data, and the system control circuit 50 controls the exposure control unit 40 and the distance measurement control unit 42 by performing auto-focus (AF) processing, auto-exposure (AE) processing, and flash pre-emission (EF) processing of a through-the-lens (TTL) system based on an obtained computation result. Further, the image processing circuit 20 performs predetermined computation processing on the picked-up image data and performs auto-white-balance (AWB) processing of the TTL system based on an obtained computation result.

The memory control circuit 22 controls the A/D converter 16, the timing generation circuit 18, the image processing circuit 20, the image display memory 24, the D/A converter 26, the memory 30, and the compression/expansion circuit 32. The data outputted from the A/D converter 16 is written into the image display memory 24 or the memory 30 via the image processing circuit 20 and the memory control circuit 22 or directly via the memory control circuit 22.

The image display unit 28 is constructed using a TFT liquid crystal display (LCD) or the like. Image data for displaying written into the image display memory 24 is displayed on the image display unit 28 via the D/A converter 26.

By sequentially displaying picked-up image data on the image display unit 28, an electronic finder function is achieved. Also, the image display unit 28 is capable of being arbitrarily turned ON/OFF for displaying in accordance with an instruction from the system control circuit 50. When the image display unit 28 is turned OFF, it is possible to significantly reduce the power consumption of the image pickup apparatus 100.

The memory 30 is a memory composed of a volatile memory and/or a non-volatile memory in which a photographed still image or moving image is stored and which has a storage capacity sufficient enough to store a predetermined number of still images or a predetermined time period of moving images. Also, in the case of continuous photographing, in which multiple still images are continuously photographed, or in the case of panoramic photographing, it is possible to perform image writing into the memory 30 at high speed and in high volume. Further, it is possible to use the memory 30 as a work area of the system control circuit 50.

The compression/expansion circuit 32 is a circuit that compresses/expands image data through adaptive discrete cosine transform (ADCT) or the like, and reads image data from the memory 30, performs compression processing or expansion processing on the read image data, and writes the processed image data into the memory 30.

The exposure control unit 40 controls the shutter 12 provided with the diaphragm function and achieves a flash dimming function in conjunction with the flash 48. The distance measurement control unit 42 controls focusing of the photographing lens 10. The zoom control unit 44 controls zooming of the photographing lens 10. The barrier control unit 46 controls an operation of the protection unit 102 serving as a barrier. The flash 48 has an AF auxiliary light projection function and the flash dimming function. The exposure control unit 40 and the distance measurement control unit 42 are controlled by the TTL system. Based on a result of computation of picked-up image data by the image processing circuit 20, the system control circuit 50 controls the exposure control unit 40 and the distance measurement control unit 42.

Also, the system control circuit 50 controls the entire image pickup apparatus 100. The memory 52 stores constants, variables, programs, and the like for the operation of the system control circuit 50. The display unit 54 is composed of a liquid crystal display apparatus, a speaker, and the like that display an operation state, a message, and the like using characters, images, sounds, and the like in accordance with the execution of a program by the system control circuit 50. Here, one or multiple display unit s 54 are arranged at easily observable positions in the vicinity of the operation unit of the image pickup apparatus 100. Each display unit 54 is a combination of an LCD, an LED, a sound generating element, and the like, for instance. Also, some of the functions of the display unit 54 are provided in the optical finder 104.

Among the display contents of the display unit 54, examples of the display contents of the LCD or the like include a single shutter/continuous shutter indication, a self-timer indication, a compression rate indication, an indication of the number of recording pixels, an indication of the number of recorded images, an indication of the remaining number of photographable images, a shutter speed indication, a stop value indication, an exposure correction indication, a flash indication, a red-eye alleviation indication, a macro photographing indication, a buzzer setting indication, a remaining clock battery level indication, a remaining battery level indication, an error indication, an information indication by a number composed of multiple digits, an indication of the attachment or detachment state of a recording medium 200, a communication I/F operation indication, a date and time indication, and the like. Also, among the display contents of the display unit 54, examples of the display contents of the optical finder 104 include an in-focus indication, a camera shake warning indication, a flash charge indication, a shutter speed indication, a stop value indication, an exposure correction indication, and the like.

The nonvolatile memory 56 is a memory that is electrically erasable/recordable and an EEPROM or the like is used as the nonvolatile memory 56, for instance. Stored in the identification information unit 58 are various kinds of identification information for performing authentication prior to communication with the mobile terminal 300 via the communication unit 110 and the antenna 112.

The mode dial switch 60, the shutter switches 62 and 64, the single shutter/continuous shutter switch 66, the compression mode switch 68, the operation unit 70, and the main switch 72 are each an operation unit that is operated in order to input various operation instructions into the system control circuit 50 and are each composed of a switch, a dial, a touch panel, a pointing device by line-of-sight detection, a voice recognition device, or a combination thereof, for instance.

Each of these operation unit s will be concretely described below. The main switch 72 allows the switching of a setting between a power-ON state and a power-OFF state. The mode dial switch 60 allows the switching of a setting among various function modes, such as an automatic photographing mode, a photographing mode, a panoramic photographing mode, a reproduction mode, a multi-screen reproduction/erase mode, and a personal computer (PC) connection mode. The shutter switch SW1 (62) is turned ON midway through an operation of a shutter button (not shown) and instructs the start of various operations, such as auto-focus (AF) processing, auto-exposure (AE) processing, auto-white-balance (AWB) processing, flash pre-emission (EF) processing, and the like.

The shutter switch SW2 (64) is turned ON at completion of the operation of the shutter button (not shown) and instructs the execution start of a series of processing such as exposure processing for writing image data based on a signal read from the image pickup element 14 into the memory 30 via the A/D converter 16 and the memory control circuit 22, development processing using computations in the image processing circuit 20 and the memory control circuit 22, reading processing for reading the image data from the memory 30, compression processing in the compression/expansion circuit 32, and recording processing for writing the image data into the recording medium 200.

The single shutter/continuous shutter switch 66 allows the setting of a single-exposure mode, in which the photographing of one frame is performed when the shutter switch SW2 (64) is pressed and then a waiting state is set, and a continuous-exposure mode in which photographing is successively performed while the shutter switch SW2 (64) is being pressed.

The compression mode switch 68 allows the selection of a compression ratio of JPEG (Joint Photographic Experts Group) compression or the selection of a CCDRAW mode in which a signal of the image pickup element 14 is digitized as it is and is recorded onto a recording medium.

The operation unit 70 is composed of various buttons, a touch panel, and the like, and includes a menu button, a set button, a macro button, a multi-screen reproduction/page-turning button, a flash setting button, a self-timer button, a menu movement + (plus) button, a menu movement - (minus) button, a reproduction image movement + (plus) button, a reproduction image movement - (minus) button, a photographing image quality selection button, an exposure correction button, a date and time setting button, a reproduction switch that allows the setting of various function modes (such as a reproduction mode, a minus screen reproduction/erase mode, and a PC connection mode), an AF mode setting switch that allows the setting of various AF modes (such as a one-shot AF mode, in which when the shutter switch SW1 (62) is pressed, an auto-focus operation is started and, once an in-focus state is obtained, the in-focus state is maintained, and a servo AF mode in which while the shutter switch SW1 (62) is being pressed, the auto-focus operation is continuously performed), an image display ON/OFF switch that allows the setting of the ON/OFF state of the image display unit 28, a quick review ON/OFF switch that allows the setting of a quick review function for automatically reproducing photographed image data immediately after the photographing, and the like. Note that as to each of the plus buttons and the minus buttons described above, by providing a rotary dial switch, it becomes possible to perform the selection of numerical values and functions more speedily.

The power supply control unit 80 is composed of a battery detection circuit, a DC-DC converter, a switching circuit for performing the switching between blocks to be energized, and the like, and performs detection of the presence or absence of a mounted battery, a battery type, and a remaining battery level, controls the DC-DC converter based on a result of the detection and instructions from the system control circuit 50, and supplies a required voltage to respective unit s including the recording medium for a required time. The power supply 86 is composed of a primary battery, such as an alkaline battery or a lithium battery, a secondary battery such as a NiCd battery, a NiMH battery, or a Li-ion battery, an AC adaptor, and the like.

The protection unit 102 is a barrier that prevents contamination and damage of the image pickup unit by covering the image pickup unit including the photographing lens 10 of the image pickup apparatus 100. The optical finder 104 allows photographing to be performed without using the electronic finder function achieved by the image display unit 28. Also, provided in the optical finder 104 are some of the functions of the display unit 54 such as the in-focus indication, the camera shake warning indication, the flash charge indication, the shutter speed indication, the stop value indication, the exposure correction indication, and the like.

The communication unit 110 has a short-distance high-speed data communication function based on the Bluetooth standard. The antenna 112 establishes a communication line between the image pickup apparatus 100 and another device using the communication unit 110.

An interface 128 serves as an interface with a recording medium such as a memory card or a hard disk. A connector 127 establishes connection with the recording medium such as a memory card or a hard disk.

It should be noted here that in this embodiment, a case where one system of an interface and a connector is provided for attachment of the recording medium has been described, although multiple systems of interfaces and connectors may be provided for the attachment of the recording medium. Also, interfaces and connectors under different standards may be combined with each other. Further, as the interface 128 and the connector 127, an interface and a connector for a PCMCIA (Personal Computer Memory Card International Association) card, a CF (Compact Flash (registered trademark) card, an MMC (MultiMedia Card), or the like may be used. Still further, when such an interface and a connector for the PCMCIA card or the CF card are used as the interface 128 and the connector 127, by connecting a communication card such as a LAN card, a modem card, a USB card, an IEEE (Institute of Electrical and Electronic Engineers) 1394 card, a P1284 card, an SCSI (Small Computer System Interface) card, or a communication card for PHS or the like, it becomes possible to exchange image data and management information attached to the image data with another computer or a peripheral device such as a printer.

A recording medium 120 is composed of a memory card, a hard disk, or the like. This recording medium 120 includes a recording unit 122 composed of a semiconductor memory, a magnetic disk, or the like, an interface 124 with the image pickup apparatus 100, a connector 126 for establishing connection with the image pickup apparatus 100, and an identification information unit 129.

It should be noted here that in this embodiment, a case where wireless communication based on the Bluetooth standard is performed will be described, although the present invention is not limited to this and may be applied to wireless LAN communication based on IEEE802.11a/b/g/h, UWB (Ultra Wide Band) communication, or the like using the same technique and the wireless unit s are not specifically limited.

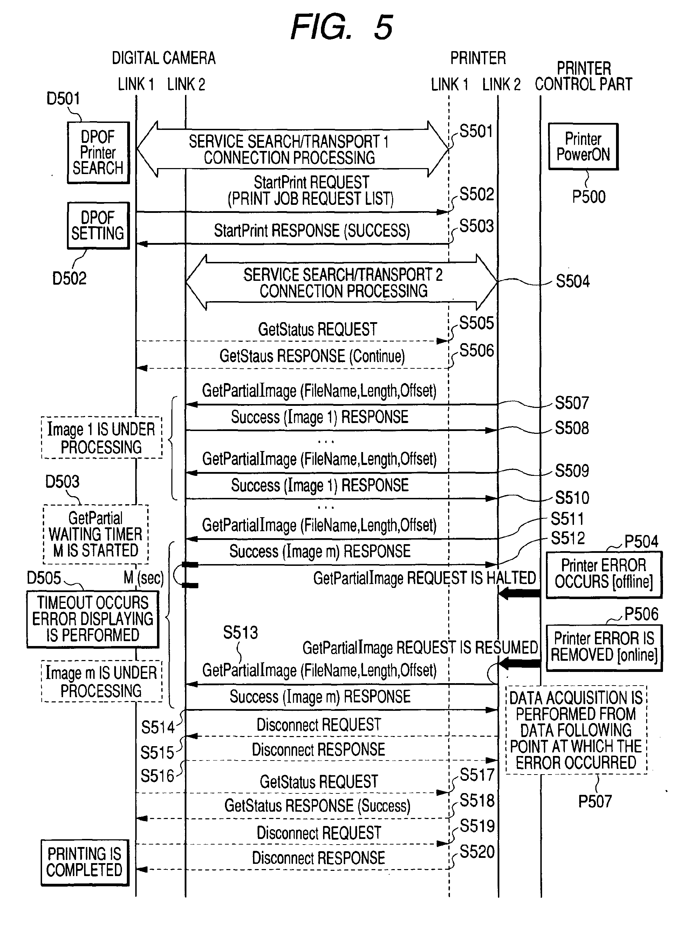

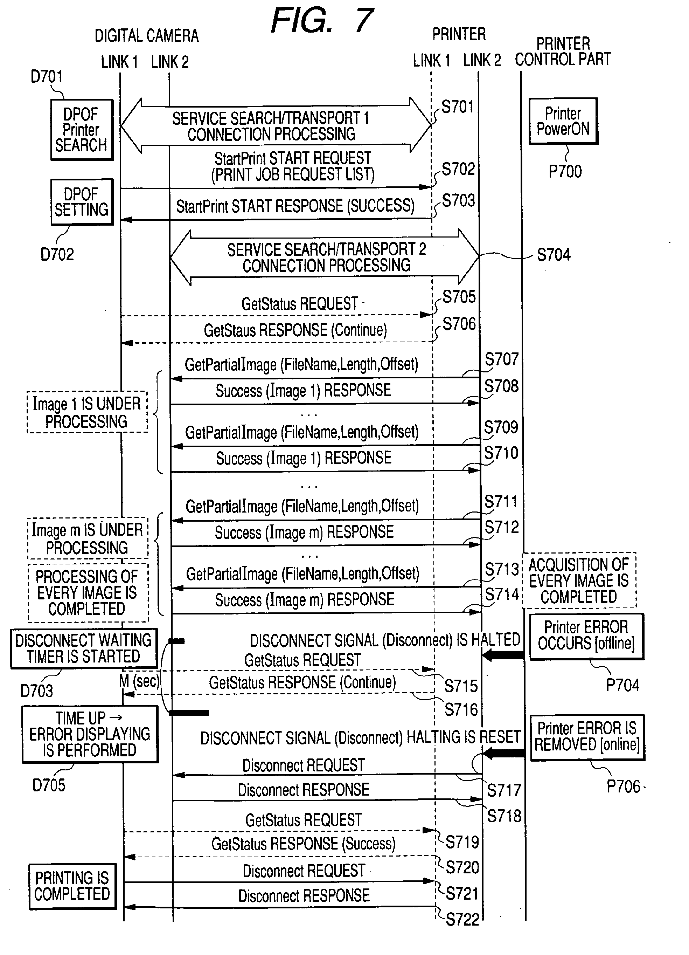

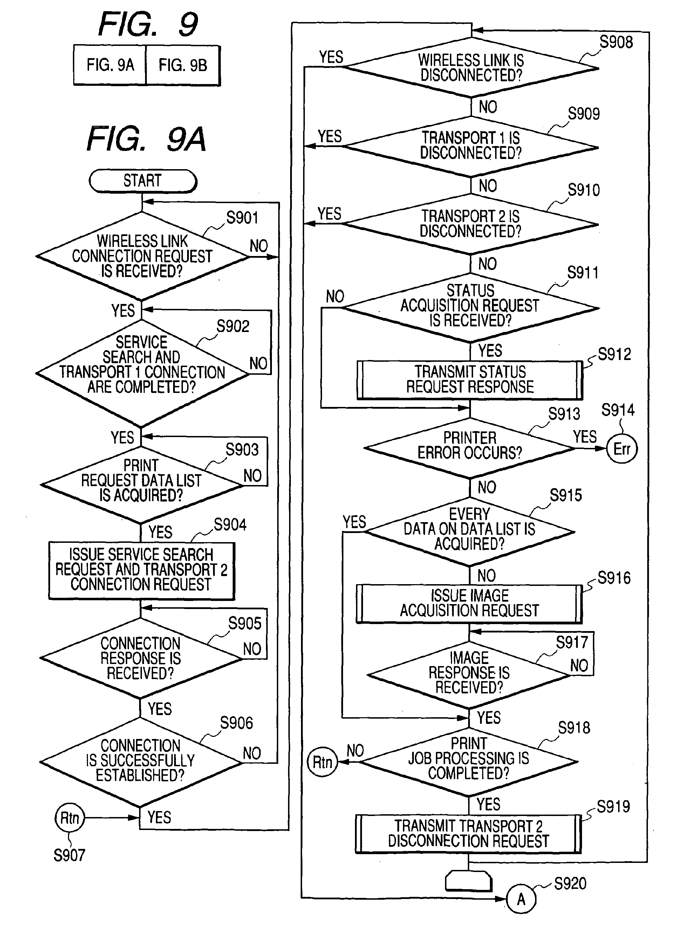

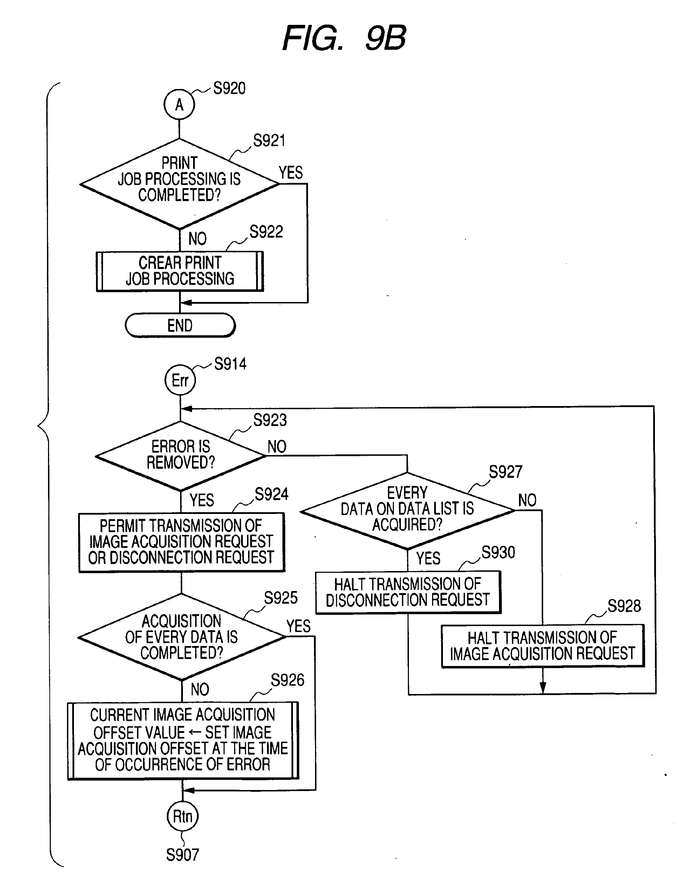

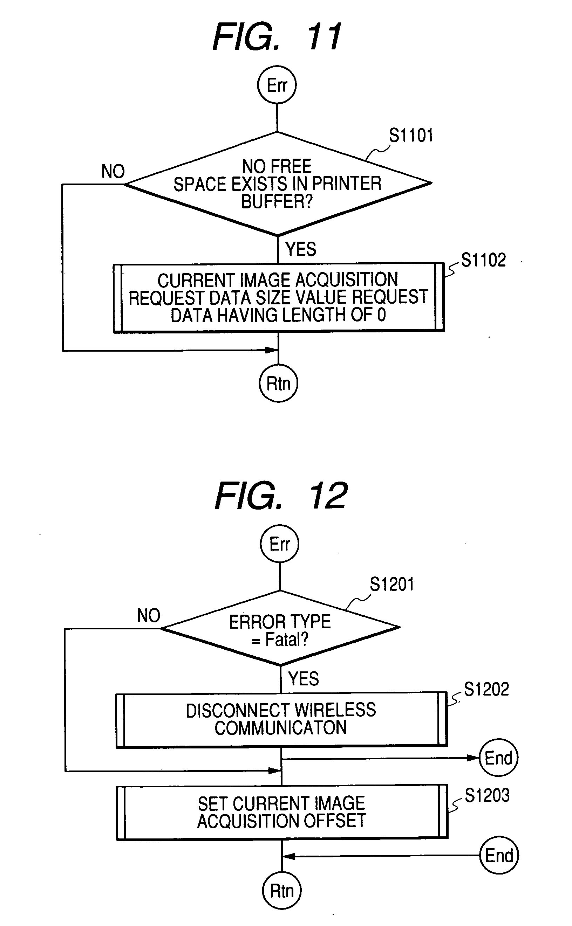

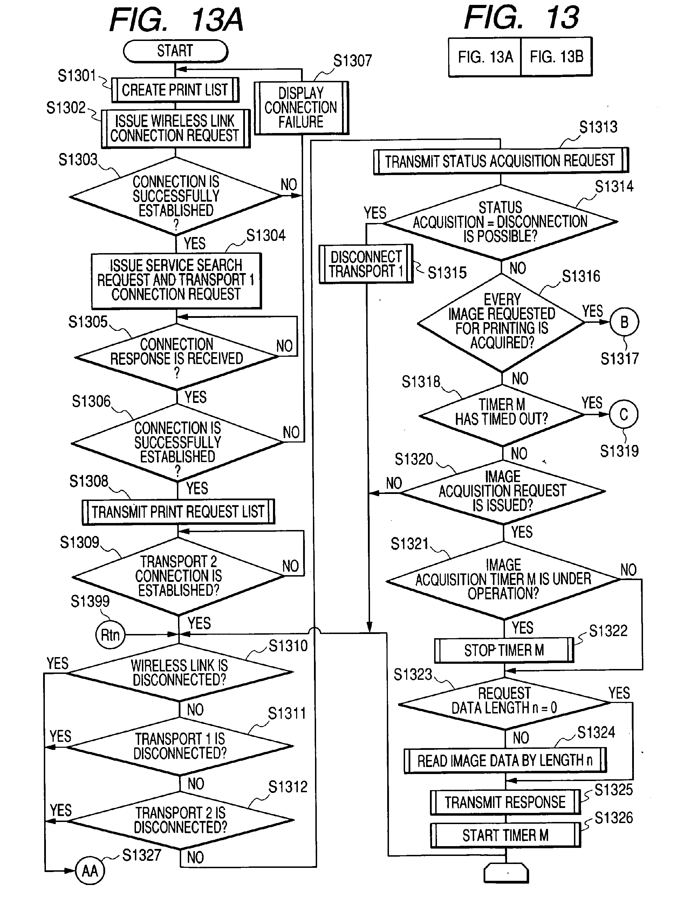

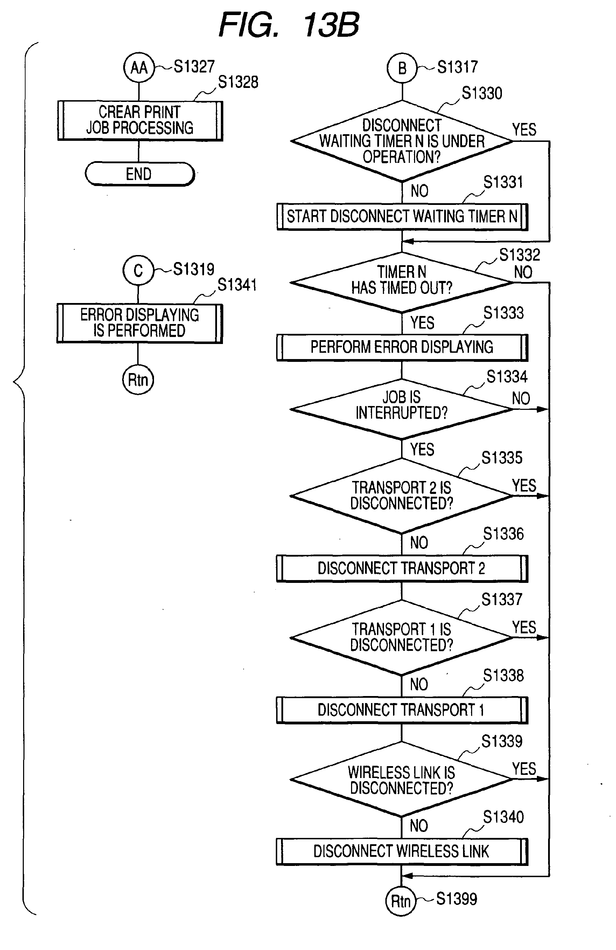

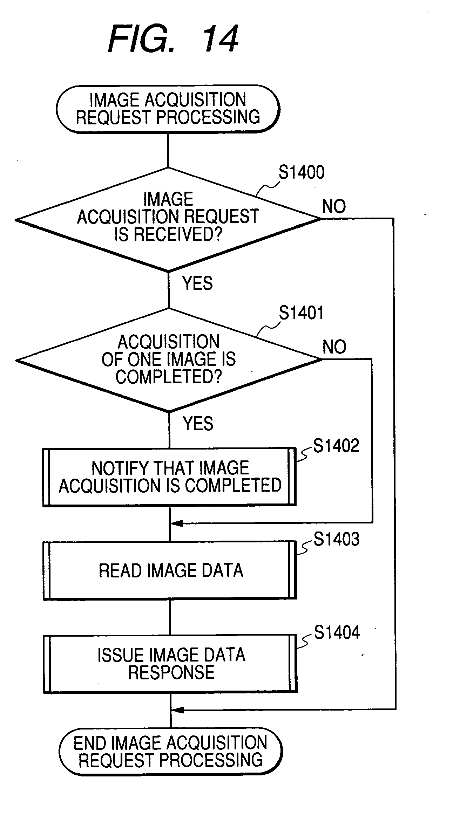

Next, a concrete operation of the apparatuses in this embodiment will be described by following the sequence diagrams shown in FIGS. 5, 7, and 8. Also, a detailed operation of the printer 300 will be described by following the flowcharts shown in FIGS. 9A, 9B and 11. Further, a concrete operation of the image pickup apparatus 100 will be described by following the flowcharts shown in FIGS. 13A, 13B and 14. Note that in this embodiment, it is assumed that an image picked up by the image pickup apparatus 100 is printed by the printer 300 using a procedure of the Advanced Image Printing defined in the Basic Imaging Profile of the Bluetooth standard. First, an operation of the printer 300 will be described.

The printer 300 is powered on by the power supply control unit 307 in response to an instruction from the operation unit 340 and the wireless unit 310 is also set as operable (P500). Then, the printer 300 waits for a wireless link connection request from the image pickup apparatus 100 (S901). After a wireless link is established, the printer 300 performs service search and transport 1 connection requested by the image pickup apparatus (S501, S902). Next, the printer 300 waits for a StartPrint request expressing a request for a print job request data list (S502, S903). After acquiring the print job request data list, the printer 300 returns a response showing that the print job request is successfully received (S503). Next, the printer 300 requests the image pickup apparatus 100 to perform service search and transport 2 connection (S504, S904). If a connection response is received from the image pickup apparatus 100 (S504, S905) and the response shows that the connection is successfully established (S504, S906), the printer 300 repeatedly performs processing described below afterward until print job processing is completed (S921).

First, the printer 300 confirms whether a wireless link that is the physical layer of wireless communication is disconnected (S908). If the wireless link is not disconnected, the printer 300 next confirms whether the transport 1 is disconnected (S909). If the transport 1 is not disconnected, the printer 300 next confirms whether the transport 2 is disconnected (S910). If any of the wireless link, the transport 1, and the transport 2 is disconnected, the printer 300 proceeds to processing A (S920) and checks whether the print job processing is completed (S921). If the print processing is not yet completed, the printer 300 erases all the currently performed print job processing and ends the entire processing (S922). If the print job processing is completed, this means that the processing is completely ended.

On the other hand, if none of the wireless link, the transport 1, and the transport 2 is disconnected, the printer checks whether a status acquisition request (GetStatus request) is received from the image pickup apparatus 100 (S505, S517, S911). If a result of this checking is affirmative, the printer 300 transmits a status request response (GetStatus response) to the image pickup apparatus 100 (S506, S518, S912). It should be noted here that in this embodiment, a response "Continue" or "Success" is returned in response to the status request depending on whether the link 2 is established or disconnected, although it does not matter whether another status request is issued or not.

Next, the printer 300 checks whether a printer error has occurred in itself (S913). If an error has occurred (P504), the printer 300 performs processing Err (S914). In the processing Err, first, the printer 300 checks whether the printer error occurring to itself is removed and waits for the error to be removed (P506, S923). It should be noted here that although not illustrated in the drawings, when an error occurs, if a warning or the like is issued by performing warning displaying using an indicator or outputting a sound, user's convenience is increased. It should also be noted here that if the printer does not have a display capability, it is possible to request another wireless communication device having a display function to display an error warning.

If the error is not removed, the printer 300 checks whether every image data written on the print job request list received in advance from the image pickup apparatus 100 is acquired (S927) and, if the acquisition of every image is completed, the printer 300 halts transmission of a disconnection request signal (Disconnection request) to the image pickup apparatus 100 (P704, S930). If every image is not yet acquired, the printer 300 halts transmission of an image acquisition request (GetPartialImage) to be described later to the image pickup apparatus 100 (P504, S928). If the error is removed, the printer 300 is set under a status where it is permitted to transmit an image acquisition request (GetPartialImage) or a disconnection request to the image pickup apparatus 100 (P506, P706, S924). Also, if every image is already acquired, the printer 300 performs processing Rtn (S907) which follows the current processing. On the other hand, if every image is not yet acquired, performing the processing Rtn (S907), the printer 300 changes an offset value from the start of an image file under acquisition to an offset value corresponding to data acquired until the occurrence of the error and makes a setting so that it is possible to perform image acquisition from this offset value with the next image acquisition request (P507, S926).

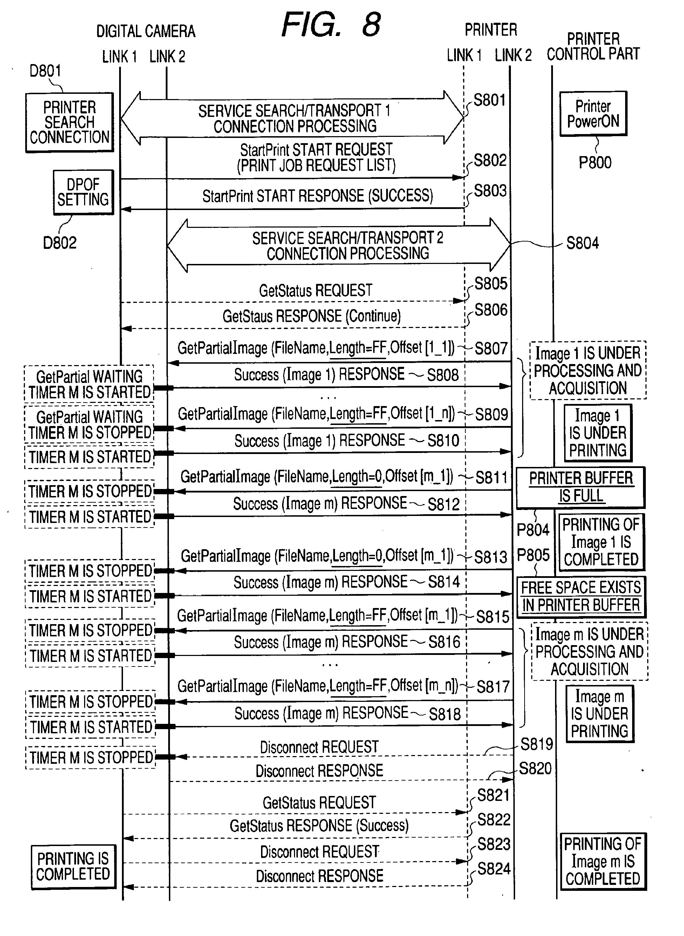

Also, if no printer error occurs (S913), the printer 300 next checks whether every image data described on the print job request list received in advance from the image pickup apparatus 100 is acquired (S915). If every image data is not yet acquired, the printer 300 issues an image acquisition request (GetPartialImage) (S507, S509, S511, S513, S916). Here, the image acquisition request (GetPartialImage) will be described in detail with reference to FIGS. 8 and 11. It is not impossible to issue the image acquisition request (GetPartialImage) at all times and it is required to change control when a free space sufficient enough to pre-read images does not remain in the RAM 303 that is a storage area of the printer 300. If it is detected that no free space remains in the printer buffer (RAM 303) (P804, S1101), the printer 300 requests data having a length of "0" by setting a portion showing a data size (Length) of a parameter used to issue the image acquisition request (GetPartialImage) to the image pickup apparatus 100 to "0 (zero)" (S811, S813, S1102). It should be noted here that in this embodiment, the processing described above is performed during the processing Err, although there occurs no problem even if this processing is performed during the image acquisition request processing (S916).

Next, if an image response (Success) is received (S917) and image data is contained in the response, the printer 300 stores the received image data in the storage area of the printer buffer, transfers the stored image data to the printer engine unit 306 through the image processing unit 308, and starts printing. However, if the image acquisition request is transmitted by setting the data size at "0" as described above, this results in a situation where the image pickup apparatus 100 returns a response having a data size of "0", that is, a response having no image data. In this case, it is possible to create a free space in the printer buffer by printing images already stored in the printer buffer.

Next, the printer 300 checks whether the print job processing designated by the print job request is completed (S918). If the processing is completed, the printer 300 transmits a transport 2 disconnection request signal (Disconnection request) to the image pickup apparatus 100 (S919) and returns to the processing Rtn that is the start portion of the repetitive processing. On the other hand, if the print job is not yet completed, the printer 300 returns to the processing Rtn without transmitting the disconnection request signal to the image pickup apparatus 100.

Next, an operation of the image pickup apparatus 100 will be described.

First, the image pickup apparatus 100 makes a print job setting by creating a print list (D502, S1301). Next, when a communication partner is found, the image pickup apparatus 100 issues a wireless link connect request (D501, S501, S1302) and checks whether the connection is successfully established (S1303). If a result of this checking is negative, displaying for indicating connection failure is performed (S1307). It should be noted here that when the connection is not successfully established, if warning displaying is performed using an indicator or a warning is issued by outputting a sound, for instance, user's convenience is increased.

Next, the image pickup apparatus 100 issues a service search request and a transport 1 connect request to the printer 300 (S501, S1304). Then, the image pickup apparatus 100 waits for a connect response (S1305). If recognizing that the connection is successfully established (S1306), the image pickup apparatus 100 next performs the transmission of the print request list based on information created in advance (S502, S503, S1308). Then, the image pickup apparatus 100 waits for transport 2 connection with the printer 300 to be established (S1309). After the connection is established, the image pickup apparatus 100 repeatedly performs processing described below until print job processing is completed.

First, the image pickup apparatus 100 confirms whether a wireless link that is the physical layer of wireless communication is disconnected (S1310). If the wireless link is not disconnected, the image pickup apparatus 100 next confirms whether the transport 1 is disconnected (S1311). If the transport 1 is not disconnected, the image pickup apparatus 100 next confirms whether the transport 2 is disconnected (S1312). If any of the wireless link, the transport 1, and the transport 2 described above is disconnected, the image pickup apparatus 100 performs processing AA (S1327) which follows the current processing, erases all the print job processing, performs closing processing, and ends the entire processing (S1328).

On the other hand, if none of the wireless link, the transport 1, and the transport 2 is disconnected, the image pickup apparatus 100 transmits a status acquisition request (GetStatus request) to the printer 300 (S505, S517, S1313). If a response (GetStatus response) is received with respect to this status acquisition request (GetStatus request) and a value of the status acquisition indicates that disconnection is possible (S506, S518, S1314), the image pickup apparatus 100 performs processing for disconnecting the transport 1 with the printer 300 (S519, S520, S1315). In this embodiment, the image pickup apparatus 100 issues the status acquisition request to the printer 300 every time the repetitive processing is performed. With this construction, however, the status acquisition request is issued frequently and a long time is consumed by the processing. Therefore, a change may be made so that the status acquisition request is issued at intervals of a fixed time using a timer or the like. Even in this case, no influence is exerted on this embodiment.

Next, the image pickup apparatus 100 checks whether the acquisition by the printer of every image requested for printing is completed (S1316). If every image is requested, the image pickup apparatus 100 performs processing B (S1317), which follows the current processing. In the processing B, every image requested for printing is acquired by the printer 300, so that the image pickup apparatus 100 shifts to a status where it waits for a disconnect signal. First, the image pickup apparatus 100 confirms whether a disconnect waiting timer N is started (S1330). If the timer is not yet activated, the image pickup apparatus 100 starts the disconnect waiting timer N (S1331). Following this, the image pickup apparatus 100 checks whether the timer N has timed out (S1332). If the timer N has timed out, the image pickup apparatus 100 displays an error warning on the display 50 (S1333). In addition, the image pickup apparatus 100 is capable of selecting whether a job executed by the printer 300 is to be interrupted, and selects one of job interruption and job continuation (S1334). Also, although not illustrated in the drawings, if the job interruption is already selected, it is not required to perform the selection processing and the like any more. If the continuation is selected, the image pickup apparatus 100 ends the processing B and proceeds to processing Rtn (S1399). On the other hand, if the job interruption is selected, the image pickup apparatus 100 checks whether the transport 2 is disconnected (S1335) and, if the transport 2 is not disconnected, performs processing for disconnecting the transport 2 (S1336). Further, the image pickup apparatus 100 checks whether the transport 1 is disconnected (S1337) and, if the transport 1 is not disconnected (S1337), disconnects the transport 1 (S1338). Still further, the image pickup apparatus 100 checks whether the wireless link is disconnected (S1339). If the wireless link is not disconnected (S1339), the image pickup apparatus 100 performs wireless link disconnection (S1340), ends the processing B, and proceeds to the processing Rtn (S1399).

On the other hand, if the acquisition of every image requested for printing is not yet completed (S1316), the image pickup apparatus,100 next checks whether an image acquisition timer M is stopped which is to be stopped when an image acquisition request (GetPartialImage) is received from the printer 300 and is to be started when a response is returned with respect to the image acquisition request (GetPartialImage) (S1318). If the timer is stopped, the image pickup apparatus 100 recognizes that any abnormal event has occurred to the printer 300, proceeds to processing C (S1319), and displays an error warning on the display 50 (S1341). As a result, it becomes possible to notify a user, who is printing out the image data of the image pickup apparatus 100 using the printer 300, that an error has occurred to the printer 300.

Also, if the image acquisition timer M has not yet timed out (S1318), the image pickup apparatus 100 checks whether an image acquisition request is issued from the printer 300 (S1320). If a result of this checking is affirmative, the image pickup apparatus 100 checks whether the image acquisition timer M is under operation (S1321). If a result of this checking is affirmative, the image pickup apparatus 100 stops the image acquisition timer M (S1322). Next, the image pickup apparatus 100 checks whether the data length "n" of requested data contained in the image acquisition request is "0 (zero)" (S1323). If the data length "n" is not "0 (zero)", the image pickup apparatus 100 reads the requested image data by the data length "n" (S1324), adds the read image data to a response signal, and transmits it (S1325). On the other hand, if the data length "n" is "0 (zero)", the image pickup apparatus 100 does not read the image data and transmits only the response signal (S812, S814, S1325). Then, the image pickup apparatus 100 starts the image acquisition timer M (S1326). Here, there is a case where the print buffer of the printer 300 becomes full during image acquisition and it becomes impossible to perform image acquisition any more. In this case, it is conceived that an image acquisition request signal is not outputted, so that the image acquisition timer M has timed out and the image pickup apparatus 100 performs error displaying. In this embodiment, however, the image data length is set to be "0 (zero)" in such a case as described above, so that it becomes possible for the image pickup apparatus 100 to re-start the image acquisition timer M and to continue the processing without performing error displaying for the user.

Also, as shown in the flowchart in FIG. 14, when an image acquisition request is issued from the printer 300 (S1400), the image pickup apparatus 100 checks whether the request is a new image request (S1401). If the acquisition of one image is completed (S1401), the image pickup apparatus 100 performs notification of the completion of the image acquisition (S1402) and writes information showing that the acquisition of the requested image is completed into an acquisition column of the print list. Following this, the image pickup apparatus 100 reads requested image data (S1403) and issues an image data response to the printer 300 (S1404).

It should be noted here that in this embodiment, a warning is displayed on the display 50, although in the case of a device that is inferior in display capability, it is possible to provide the same effect by outputting a warning sound or the like.

### <Second Embodiment>

A second embodiment of the present invention will be described next. The second embodiment differs from the first embodiment described above in a method of acquiring recovery data after an error is removed.

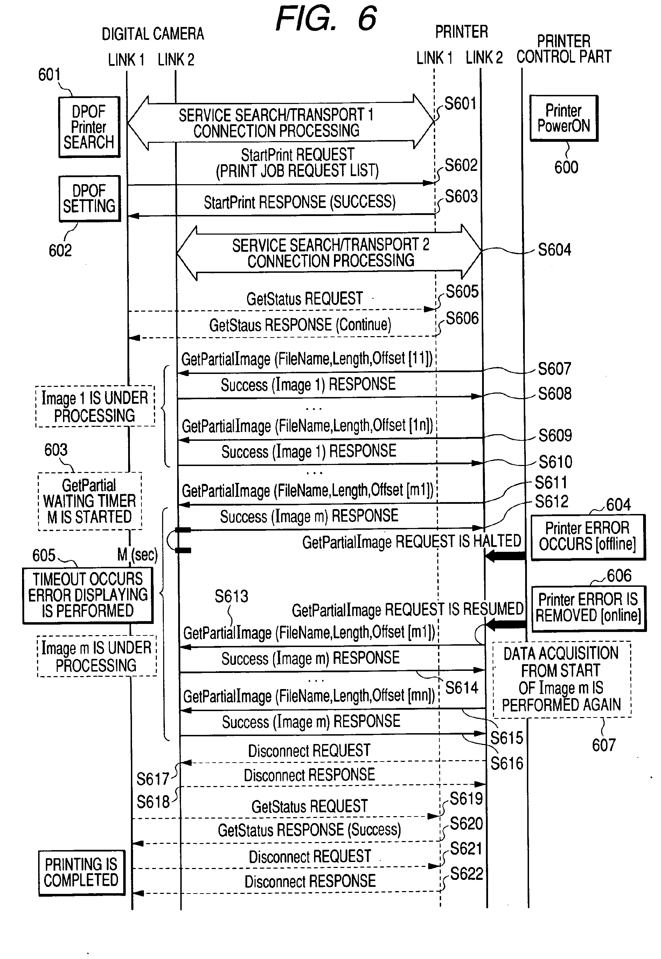

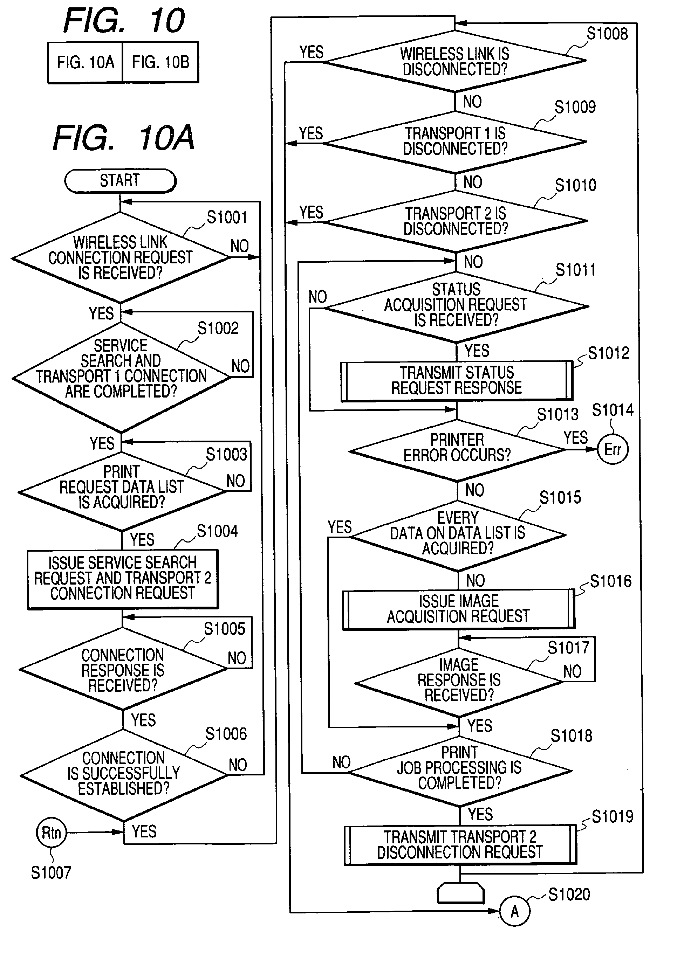

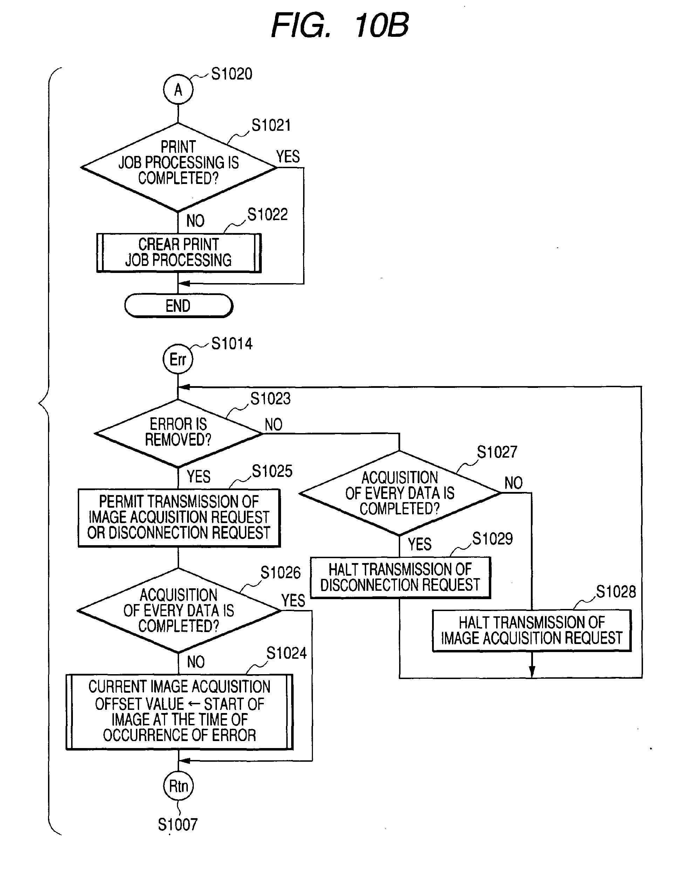

A concrete operation of the apparatuses, to which the present invention is applied, will be described with reference to the sequence diagrams shown in FIGS. 6, 7, and 8. Also, a detailed operation of the printer 300 will be described with reference to the flowcharts shown in FIGS. 10A, 10B and 11. However, a concrete operation of the image pickup apparatus 100 is completely the same as that in the first embodiment and therefore the detailed description thereof will be omitted in this embodiment.

First, an operation of the printer 300 will be described.

The printer 300 is powered on by the power supply control unit 307 in response to an instruction from the operation unit 340 and the wireless unit 310 is also set as operable (P600). Then, the printer 300 waits for a wireless link connection request from the image pickup apparatus 100 (S1001). After a wireless link is established, the printer 300 performs service search and transport 1 connection requested by the image pickup apparatus (S601, S1002). Next, the printer 300 waits for a StartPrint request expressing a request for a print job request data list (S602, S1003). After acquiring the print job request data list, the printer 300 returns a response Startprint response showing that the print job request is successfully received (S603). Next, the printer 300 requests the image pickup apparatus 100 to perform service search and transport 2 connection (S604, S1004). If a connection response is received from the image pickup apparatus 100 (S604, S1005) and the response shows that the connection is successfully established (S604, S1006), the printer 300 repeatedly performs processing described below afterward until print job processing is completed (S1021).

First, the printer 300 confirms whether a wireless link that is the physical layer of wireless communication is disconnected (S1008). If the wireless link is not disconnected, the printer 300 next confirms whether the transport 1 is disconnected (S1009). If the transport 1 is not disconnected, the printer 300 next confirms whether the transport 2 is disconnected (S1010). If any of the wireless link, the transport 1, and the transport 2 is disconnected, the printer 300 proceeds to processing A (S1020) and checks whether the print job processing is completed (S1021). If the print processing is not yet completed, the printer 300 erases the currently performed print job processing in its entirety and ends the entire processing (S1022). If the print job processing is completed, this means that the processing is completely ended.

On the other hand, if none of the wireless link, the transport 1, and the transport 2 is disconnected, the printer checks whether a status acquisition request (GetStatus request) is received from the image pickup apparatus 100 (S605, S619, S1011). If a result of this checking is affirmative, the printer 300 transmits a status request response (GetStatus response) to the image pickup apparatus 100 (S606, S620, S1012). It should be noted here that in this embodiment, a response "Continue" or "Success" is returned in response to the status request depending on whether the link 2 is established or disconnected, although it does not matter whether another status request is issued or not. Next, the printer 300 checks whether a printer error has occurred in itself (S1013). If an error has occurred (P604), the printer 300 performs processing Err (S1014). In the processing Err, first, the printer 300 checks whether the printer error occurring to itself is removed and waits for the error to be removed (P606, P706, S1023). It should be noted here that although not illustrated in the drawings, when an error occurs, if a warning or the like is issued by performing warning displaying using an indicator or outputting a sound, user's convenience is increased. It should also be noted here that if the printer does not have a display capability, it is possible to request another wireless communication device having a display function to display an error warning. If the error is not removed, the printer 300 checks whether every image data written on the print job request list received in advance from the image pickup apparatus 100 is acquired (S1027) and, if the acquisition of every image is completed, the printer 300 halts transmission of a disconnection request signal (Disconnection request) to the image pickup apparatus 100 (P704, S1029). If every image is not yet acquired, the printer 300 halts transmission of an image acquisition request (GetPartialImage) to be described later to the image pickup apparatus 100 (P604, S1028). If the error is removed, the printer 300 is set under a status where it is permitted to transmit an image acquisition request (GetPartialImage) or a disconnection request to the image pickup apparatus 100 (P606, P706, S1025). Also, if every image is already acquired, the printer 300 proceeds to processing Rtn (S1007). On the other hand, if every image is not yet acquired, before proceeding to the processing Rtn (S1007), the printer 300 changes an offset value from the start of an image file under acquisition to an offset value corresponding to data acquired until the occurrence of the error and makes a setting so that it is possible to perform image acquisition from this offset value with the next image acquisition request (P607, S1024).

Also, if no printer error occurs (S1013), the printer 300 next checks whether every image data described on the print job request list received in advance from the image pickup apparatus 100 is acquired (S1015). If every image data is not yet acquired, the printer 300 issues an image acquisition request (S613, S1016). Here, the image acquisition request will be described in detail. It is not impossible to issue the image acquisition request at all times and it is required to change control when a free space sufficient enough to pre-read images does not remain in the RAM 303 that is a storage area of the printer 300. If it is detected that no free space remains in the printer buffer (P804, S1101), the printer 300 requests data having a length of "0" by setting a portion showing a data size of a parameter used to issue the image acquisition request to the image pickup apparatus 100 to "0 (zero)" (S811, S813, S1102). It should be noted here that in this embodiment, the processing described above is performed during the processing Err, although there occurs no problem even if this processing is performed during the image acquisition request processing (S1016).

Next, when an image response is received (S1017), if image data is contained in the image response, the printer 300 stores the received image data in its storage area, transfers the stored image data to the printer engine unit 306 via the image processing unit 308, and starts printing. Also, the printer 300 checks whether print job processing designated by the print job request is completed (S1018). If the print job processing is completed, the printer 300 transmits a transport 2 disconnection request signal to the image pickup apparatus 100 (S1019). Then, the printer 300 returns to processing Rtn that is the start portion of the repetitive processing. On the other hand, if the print job is not yet completed, the printer 300 returns to the processing Rtn (S1007) without transmitting the disconnection request signal to the image pickup apparatus 100.

### <Third Embodiment>

A third embodiment of the present invention will be described next. In the third embodiment of the present invention, a case will be described in which the printer 300 has a printer buffer area, with which it is possible to pre-read image data of one or more images designated by the print job request data list, and a fatal error, such as the lost of image data stored in the printer buffer area, occurs.

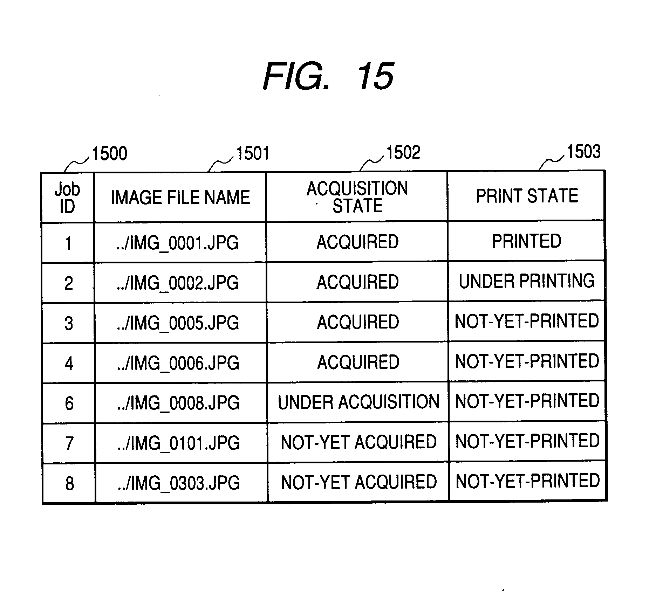

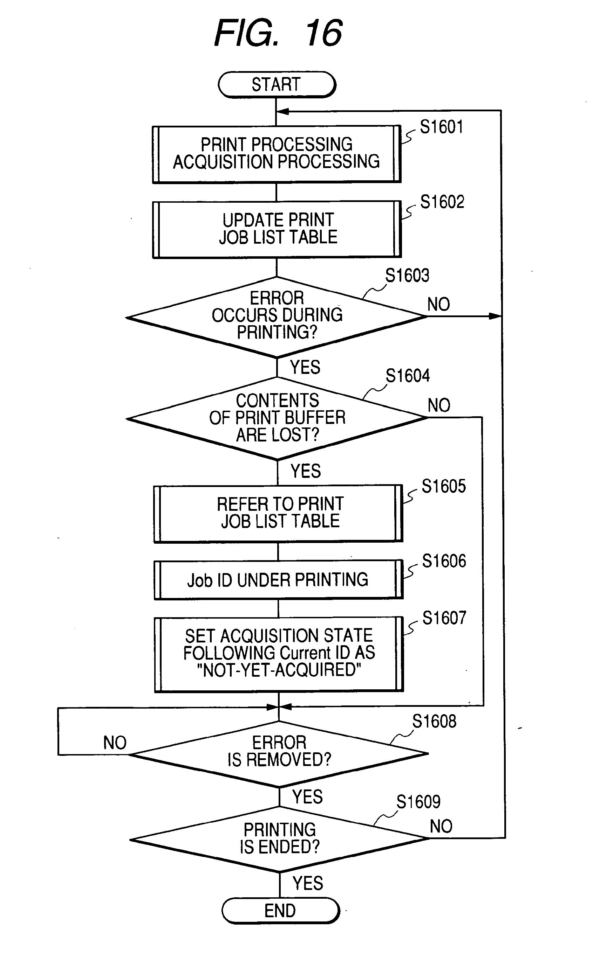

The third embodiment of the present invention is the same as the first embodiment and the second embodiment described above in almost all portions, so that only the most characteristic portions of the third embodiment that are clearly different from those in the two embodiments described above will be described in this embodiment. A concrete operation of the apparatuses, to which the present invention is applied, will be described with reference to FIG. 15 showing a print job list table stored in the print request list management unit 209 of the printer 300 and FIG. 16 that is a flowchart illustrating an operation of the printer 300.

The printer 300 updates the print job list table (S1602) while performing print processing and image data acquisition processing (S1601). As shown in FIG. 15, the print job list table is composed of a "Job ID" column 1500 in which job IDs for identifying respective print jobs are described, an "IMAGE FILE NAME" column 1501 in which file names stored in the image pickup apparatus are described, an "ACQUISITION STATE" column 1502 showing whether each designated image is already acquired, and a "PRINT STATE" column 1503 showing whether each designated image is already printed. It should be noted here that in the third embodiment, the print job list table gives only the Job IDs, the file names, the acquisition states, and the print states, although the print job list table may also contain setting information showing the number of prints to be made, which print-out form is to be used, and the like in addition to the information described above.

Next, the printer 300 checks whether an error has occurred during printing (S1603). If an error has occurred, the printer 300 next checks whether image data already pre-read/acquired and accumulated in the storage area is lost for any reason (S1604). If the image data is not lost, the printer 300 waits for the error to be removed (S1608) and checks whether every print job contained in the print job list table is completed (S1609). If every print job is completed, the printer 300 ends the entire processing; if not, the printer 300 returns to the print processing and the acquisition processing (S1601) at the start of the repetitive processing and continues the processing. On the other hand, if the image data is lost, the printer 300 refers to the print job list table (S1605), sets a current ID, which is information for activating image acquisition, at a job ID under printing (S1606), sets the acquisition state of each print job following the Current ID as "not-yet-acquired" (S1607), and performs to the processing in steps S1608 and S1609 that follow. As a result, when all of images assigned the job IDs "1" to "8" or some of the images from the job ID "1" are stored in the storage area of the printer buffer, the printing of an image assigned the Job ID "1" is finished, an error occurs midway through the printing of an image assigned the job ID "2", and the images stored in the storage area of the printer buffer are lost, for instance, the printer 300 sets the current ID at the job ID "2" under printing, sets the acquisition state of each print job following the current ID as "not-yet-acquired", proceeds to the following processing, and resumes the image acquisition from the image file "../IMG_0002.JPG". Also, although not illustrated in the drawings, the printer 300 may interrupt the job under printing and discharge a print sheet. With this construction, even after such a fatal error occurs, the printer performs data acquisition again from a point at which the error occurs to the printer. As a result, in particular when wireless communication is used and a user exists at a remote place, this embodiment provides a unique effect that it is possible to perform re-printing processing without bothering the user.

### <Another Embodiment>

A case where a fatal error occurs to the printer 300 and therefore a printer operation becomes impossible will be described with reference to the flowchart shown in FIG. 12. The printer 300 checks whether the type of the error is fatal (S1201). If a result of this checking is affirmative, the printer 300 disconnects wireless communication (S1202); if not, the printer 300 sets the acquired offset value of an image under acquisition as an offset for image acquisition to be requested after error recovery (S1203).

With this construction, this embodiment provides a unique effect that at a point in time when wireless communication between the image pickup apparatus 100 and the printer 300 is disconnected, it is possible to erase every print job and to perform error displaying for the user. In addition, when such forced wireless communication disconnection occurs, it is possible to issue another warning showing that, for instance, a problem exists in a surrounding radio wave environment; which is an effect unique to the embodiments.

It should be noted here that in the embodiments described above of the present invention, wireless communication is performed using two transports, although the number of transports is not limited to this.

As described above, according to the present invention, it becomes possible to perform error control and flow control at the time of image formation and to issue an error notification to a user using the Advanced Image Printing defined in the Basic Imaging Profile of the Bluetooth standard.

Also, as described above, according to the embodiments described above, an effect is provided that it is possible for the image pickup apparatus to issue a notification of an error occurring to the image forming apparatus during image printing and to perform the flow control of print data using the same protocol, to notify a user of the occurrence of the error regardless of the status of the image forming apparatus, and to flexibly perform image printing.

Further, as described above, according to the present invention, even with a simple communication protocol that does not contain error control and flow control, it becomes possible to perform the error control and the flow control.

## Claims

1. A communication apparatus comprising:
an instruction means for instructing a communication partner to transmit data having a designated data length; and
a discrimination means for discriminating a status of the communication apparatus,
wherein the instruction means instructs the communication partner to interrupt data transmission by setting the designated data length to a predetermined length in accordance with a result of discrimination by the discrimination means.

2. A communication apparatus according to claim 1,
wherein the instruction means instructs the communication partner to interrupt the data transmission by setting the designated data length to zero in accordance with the result of the discrimination by the discrimination means.

3. A communication apparatus according to claim 1,
wherein the discrimination means discriminates a storage capacity of a memory for storing data received from the communication partner.

4. A communication apparatus according to claim 1,
wherein the discrimination means discriminates whether an amount of data stored in a memory exceeds a predetermined value, and
the instruction means sets the designated data length to zero in accordance with the result of the discrimination.

5. A communication apparatus according to claim 1,
wherein the instruction means instructs the communication partner to perform the data transmission based on a predetermined profile procedure of the Bluetooth standard.

6. A communication apparatus according to claim 5,
wherein the predetermined profile procedure is the Advanced Image Printing defined in the Basic Imaging Profile of the Bluetooth standard.

7. A communication apparatus according to claim 1, further comprising:
a storage means for storing a data list received from the communication partner;
a judgment means for judging whether every data contained in the data list is acquired;
a detection means for detecting a data output error in the communication apparatus; and
a disconnection request halt means for halting transmission of a disconnection request requesting disconnection of communication with the communication partner in accordance with a result of judgment by the judgment means and a result of detection by the detection means.

8. A communication apparatus according to claim 1, further comprising:
a detection means for detecting a data output error in the communication apparatus; and
an instruction halt means for halting an instruction of the instruction means a result of detection by the detection means.

9. A communication apparatus according to claim 1, further comprising:
a detection means for detecting a data output error in the communication apparatus and removal of the error,
wherein the instruction means instructs the communication partner to perform the data transmission from data following already received data in accordance with a result of error removal detection by the detection means.

10. A communication apparatus according to claim 1, further comprising:
a detection means for detecting a data output error in the communication apparatus and removal of the error,
wherein the instruction means instructs the communication partner to perform the data transmission from a start of data under reception in accordance with a result of error removal detection by the detection means.

11. A communication apparatus according to claim 1, further comprising:
a detection means for detecting a data output error in communication apparatus and removal of the error; and
a judgment means for, when the detection means detects the error, judging whether already received data is lost,
wherein the instruction means instructs the communication partner to perform the data transmission from a start of data under reception in accordance with a result the judgment by the judgment means and a result of error removal detection by the detection means.

12. A communication apparatus according to claim 1, further comprising:
a detection means for detecting a data output error in the communication apparatus and removal of the error; and
a judgment means for a type of the error defected by the detection means
wherein the instruction means instructs the communication partner to perform the data transmission from a start of data under reception in accordance with a result of judgment by the judgment means and a result of error removal detection by the detection means.

13. A communication method for a communication apparatus, comprising:
notifying a communication partner about a transmission data length; and
discriminating a status of the communication apparatus,
wherein the transmission data length that the communication partner is notified about is set at a predetermined length in accordance with a result of the discrimination.

14. An image forming system, comprising:
a data generating apparatus operable to generate print data for transmission to an image forming apparatus; and
an image forming apparatus operable to receive print data from the data generating apparatus and operable to form an image in accordance with the received data;
wherein:
the image forming apparatus includes:
status determination means operable to determine a status of the image forming apparatus affecting printing; and
instruction generating means operable to generate data transmission instructions for transmission to the data generating apparatus to instruct the data generating apparatus to transmit data of a designated length, wherein the instruction generating means is operable to set the designated length in dependence upon a result of status determination by the status determination means;
the image generating apparatus includes:
means for processing transmission instructions received from the image forming apparatus to determine the designated length of the data to be transmitted; and
means for controlling data transmission to the image forming apparatus in dependence upon the determined length.

15. A data generating apparatus for use in a system according to claim 14, comprising:
means for generating print data for transmission to an image forming apparatus;
means for processing transmission instructions received from the image forming apparatus to determine the designated length of data to be transmitted; and
means for controlling data transmission to the image forming apparatus in dependence upon the determined length.

16. An image forming apparatus for use in a system according to claim 14, comprising:
means for receiving print data from a data generating apparatus and for forming an image in accordance with the received data;
status determination means operable to determine a status of the image forming apparatus affecting printing; and
instruction generating means operable to generate data transmission instructions for transmission to the data generating apparatus to instruct the data generating apparatus to transmit data of a designated length, wherein the instruction generating means is operable to set the designated length in dependence upon a result of status determination by the status determination means.

17. An image forming apparatus according to claim 16,
wherein the apparatus comprises a printer.
